# EUROPEAN PATENT APPLICATION

(11) **EP 4 297 175 A1**
(43) Date of publication of application: **27.12.2023**
(21) Application number: 22821842.6
(22) Date of filing: 14.10.2022
(51) Int. Cl.: H01M 50/55

(54) **BATTERY**

(30) Priority: 12.05.2022 CN 202221141895 U
(71) Applicant: Eve Power Co., Ltd., Jingmen, Hubei 448000 (CN)
(72) Inventor: HUANG, Liming, Jingmen, Hubei 448000 (CN); YUE, Liangliang, Jingmen, Hubei 448000 (CN); CHEN, Min, Jingmen, Hubei 448000 (CN)
(74) Representative: Murgitroyd & Company
(86) International application number: PCT/CN2022/125352
(87) International publication number: WO 2023/216505

(57) **Abstract**

A battery is provided. The battery includes a housing, a jellyroll, a first current collector plate, a second current collector plate, an output terminal, and a cover board. A top wall of the housing is provided with a through hole, and a bottom of the housing is provided with an open end. A first tab and a second tab are provided on ends of the jellyroll respectively in an axial direction of the jellyroll. The first tab is connected to the first current collector plate, and the second tab is connected to the housing via the second current collector plate. The output terminal is sealed in the through hole and connected to the first current collector plate. The cover board is sealed and insulated at the open end of the bottom of the housing.

## Description

### CROSS-REFERENCE TO RELATED APPLICATIONS

This application claims priority to Chinese Patent Application No. 202221141895.7, filed on May 12, 2022. The aforementioned application is hereby incorporated by reference in its entirety.

### TECHNICAL FIELD

The present disclosure relates to the field of battery technology, for example, relates to a battery.

### BACKGROUND

In a manufacturing process of a cylindrical battery, a positive terminal is integrated after a top central area of a housing of the battery is perforated, and a positive current collector plate of a jellyroll is welded with the positive terminal. That is, a welding equipment is used to extend into a middle hole of the jellyroll to weld the positive current collector plate to a pole, or the positive terminal is provided with a through hole, and a middle protrusion of the positive current collector plate is extended into the through hole and welded with the positive terminal. Meanwhile, a negative current collector plate is connected to a cover board, and the cover board is connected to the housing, which realizes a positive output and a negative output of the cylindrical battery.

A positive output and a negative output of a battery in related technologies are disposed on a top and a bottom of the battery respectively. When a plurality of batteries are assembled into a module, the top and the bottom of the battery are needed to be installed respectively, which not only increases a workload for assembling the batteries into the module, but also increases a total volume of the batteries after being assembled. It is not conducive to later installation and use of the battery.

Therefore, a battery is urgently needed to solve the above problems.

### SUMMARY

To solve the above problems, a battery is provided to realize a positive output and a negative output on a same side of the battery, optimizing a way batteries are assembled into a module, thereby providing a compact structure of the batteries after being assembled.

A battery is provided in an embodiment of the present disclosure. The battery includes:
a housing, wherein a top wall of the housing is provided with a through hole, and a bottom of the housing is provided with an open end;
a jellyroll, wherein a first tab and a second tab are provided on ends of the jellyroll respectively in an axial direction of the jellyroll;
a first current collector plate and a second current collector plate, wherein the first tab is connected to the first current collector plate, and the second tab is connected to the housing via the second current collector plate;
an output terminal, wherein the output terminal is sealed and insulated in the through hole, and the output terminal is connected to the first current collector plate; and
a cover board sealed at the open end of the bottom of the housing.

In an embodiment, a portion of a side wall of the housing close to the bottom of the housing is contracted inwardly to define a necking, an installation platform is formed in the housing, and the second current collector plate is disposed on the installation platform and connected to an inner wall of the housing.

In an embodiment, a bottom edge of the side wall of the housing is crimped inwardly and coupled with the necking to define a U-shaped groove, and an outer edge of the cover board is clamped in the U-shaped groove.

In an embodiment, a ratio of an area of a crimped portion of the housing to an area of a cross section of the housing ranges from 0.05 to 0.5.

In an embodiment, the battery further includes:
an explosion-proof valve, wherein the explosion-proof valve is disposed on the cover board, and a ratio of a projection area of the explosion-proof valve on a cross section of the housing to an area of a cross section of the housing ranges from 0.03 to 0.99.

In an embodiment, the explosion-proof valve is shaped as a circular ring, an outer ring diameter of the explosion-proof valve ranges from 33mm to 44mm, and an inner ring diameter of the explosion-proof valve ranges from 8mm to 14mm.

In an embodiment, a height of the housing ranges from 80mm to 120mm, and a height of the battery ranges from 81mm to 124mm.

In an embodiment, a ratio of an area of a vertical section of the housing to an area of a cross section of the housing ranges from 0.25 to 0.65.

In an embodiment, an outer diameter of the housing ranges from 10mm to 50mm.

In an embodiment, an inner diameter of the through hole ranges from 3mm to 20mm, and a distance between the through hole and the output terminal ranges from 0.5mm to 7.5mm.

In an embodiment, a top of the output terminal is provided with a first counterbore in a taper shape, a diameter of a large-diameter end of the first counterbore ranges from 2.4mm to 14mm, a bottom of the output terminal is provided with a second counterbore in a ring shape, an inner ring diameter of the second counterbore ranges from 2.1mm to 11mm, and an outer ring diameter of the second counterbore ranges from 2.4mm to 14mm.

In an embodiment, a ratio of a projection area of a top of the output terminal on a cross section of the housing to an area of a cross section of the housing ranges from 0.015 to 0.45.

Beneficial effects of the embodiments of the present disclosure are as followings:

A battery is provided in the present disclosure. An output terminal is disposed on a top wall of a housing and connected to a first tab, and a second tab is connected to an inner wall of the housing via a second current collector plate, so that the output terminal and the top wall of the housing are respectively defined as a positive terminal and a negative terminal of the battery. As such, a positive output and a negative output are provided on a same side of the battery. When batteries are assembled into a module, the positive outputs and the negative outputs are only needed to be connected on one side of the batteries, which reduces a workload for assembling the batteries into the module, optimizes a way the batteries are assembled into a module, and is conducive to reducing a total volume of the batteries after being assembled.

### BRIEF DESCRIPTION OF THE DRAWINGS

FIG. 1 is a sectional view of a battery according to an embodiment of the present disclosure.
FIG. 2 is a sectional partial enlarged diagram of A of FIG. 1.
FIG. 3 is a schematic structural diagram of a battery according to an embodiment of the present disclosure.
FIG. 4 is an bottom view of a battery according to an embodiment of the present disclosure.
FIG. 5 is a sectional view of a housing, an output terminal, and a terminal insulation part according to an embodiment of the present disclosure.

### Reference numerals:

1, housing; 10, necking; 11, installation platform; 12, U-shaped groove; 2, jellyroll; 21, first tab; 22, second tab; 3, first current collector plate; 4, second current collector plate; 5, output terminal; 51, first counterbore; 52, second counterbore; 6, cover board; 7, terminal insulation part; 8, internal insulation part; 9, sealing ring.

### DETAILED DESCRIPTION OF THE EMBODIMENTS

In the description of the present application, unless otherwise specified and limited, the term "connected to each other", "connected" or "fixed" is to be construed in a broad sense, for example, as fixedly connected, detachably connected, or integrated; mechanically connected or electrically connected; directly connected to each other or indirectly connected to each other via an intermediary; or internally connected between two elements or interactional between two elements. Meanings of the preceding terms in the present application may be understood according to situations.

In the present application, unless otherwise specified and limited, when a first feature is described as "on" or "below" a second feature, the first feature and the second feature may be in direct contact or be in contact via another feature between the two features instead of being in direct contact. Moreover, when the first feature is described as "on", "above" or "over" the second feature, the first feature is right on, above or over the second feature or the first feature is obliquely on, above or over the second feature, or the first feature is simply at a higher level than the second feature. When the first feature is described as "under", "below" or "underneath" the second feature, the first feature is right under, below or underneath the second feature or the first feature is obliquely under, below or underneath the second feature, or the first feature is simply at a lower level than the second feature.

In the description of the embodiment, terms indicating orientation or location relationships such as "up", "down", "left", and "right" are based on orientation or location relationships shown in drawings, which are only for a convenience of description and simplified operation, rather than indicating or implying that devices or elements referred to must have a specific orientation, be constructed and operated in a specific orientation, so it cannot be understood as a limitation of the present disclosure. In addition, terms "first" and "second" are only used to distinguish in terms of description and have no special meanings.

The technical solution of the present disclosure is further described with reference to drawings and embodiments.

At present, a positive terminal and a negative terminal of a cylindrical battery are disposed on a top and a bottom of the cylindrical battery respectively. When a plurality of cylindrical batteries are assembled into a module, the top and the bottom of the cylindrical battery are needed to be installed respectively. As such, a workload for assembling the cylindrical batteries into the module is increased, and a total volume of the cylindrical batteries after being assembled is increased as well, thus, it is not conducive to an installation and a use of the cylindrical battery.

A battery is provided according to an embodiment of the present disclosure. The battery is a cylindrical battery. The battery may also be other types of battery, which is not limited here.

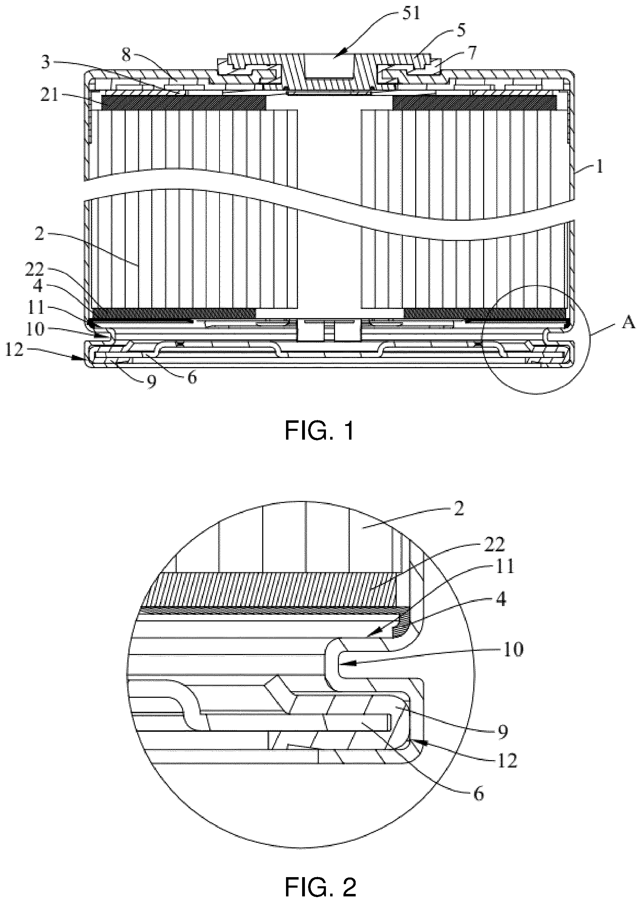

As shown in FIG. 1, the battery includes a housing 1, a jellyroll 2, a first current collector plate 3, a second current collector plate 4, an output terminal 5, and a cover board 6. A top wall of the housing 1 is provided with a through hole, and a bottom of the housing 1 is open. A first tab 21 and a second tab 22 are provided on ends of the jellyroll 2 respectively along an axial direction of the jellyroll 2. The first tab 21 is connected to the first current collector plate 3, and the second tab 22 is connected to the housing 1 via the second current collector plate 4. In an exemplary embodiment, the second tab 22 is connected to the second current collector plate 4, and the second current collector plate 4 is connected to an inner wall of the housing 1. The output terminal 5 is sealed and insulated in the through hole, and the output terminal 5 is connected to the first current collector plate 3. The cover board 6 is sealed at an open end of the bottom of housing 1.

In the embodiment, the output terminal 5 is disposed on the top wall of the housing 1 and connected to the first tab 21, and the second tab 22 is connected to the inner wall of the housing 1 via the second current collector plate 4. It should be understood that one of the first tab 21 and the second tab 22 is a positive tab and the other is a negative tab, so that the output terminal 5 and the top wall of housing 1 function respectively as a positive terminal and a negative terminal of the battery, thereby providing a positive output and a negative output on a same side of the battery. When batteries are assembled into a module, the positive outputs and the negative outputs are only needed to be connected on one side of the batteries, which reduces a workload for assembling the batteries into the module, optimizes a way the batteries are assembled into the module, and is conducive to reducing a total volume of the batteries after being assembled.

The housing 1 in the embodiment is a cylindrical housing. A center of the top wall of the housing 1 is provided with a through hole to facilitate an installation of the output terminal 5. The bottom of the housing 1 is open and sealed by the cover board 6. It should be noted that the output terminal 5 in the embodiment is a positive terminal, the first tab 21 is a positive tab, and the second tab 22 is a negative tab. Correspondingly, the first current collector plate 3 is a positive current collector plate, and the second current collector plate 4 is a negative current collector plate. The second current collector plate 4 is connected to a side wall of the housing 1, and the top wall and the side wall of the housing 1 are integrally formed, so that the output terminal 5 is a positive pole, and other areas of the top wall of the housing 1 are a negative pole, which realizes that a positive pole and a negative pole of the battery are output on a same side. In other embodiments, the output terminal 5 may also be a negative terminal, the first tab 21 is a negative tab, and the second tab 22 is a positive tab. Correspondingly, the first current collector plate 3 is a negative current collector plate, the second current collector plate 4 is a positive current collectingplate, so that the output terminal 5 is a negative pole, and other areas of the top wall of the housing 1 are a positive pole, which can also realize that a positive pole and a negative pole of the battery are output on a same side.

As shown in FIG. 1, the battery further includes a terminal insulation part 7 and an internal insulation part 8. The terminal insulation part 7 is clamped between the output terminal 5 and the through hole. The terminal insulation part 7 can not only maintain a good insulation between the output terminal 5 and the top wall of the housing 1, but also realize a sealing installation between the output terminal 5 and the housing 1, which improves a sealing performance of the housing 1. The internal insulation part 8 is disposed between the first current collector plate 3 and an inner top wall of the housing 1, thereby avoiding a connection between the first current collector plate 3 and the inner top wall of the housing 1, and further avoiding a short circuit of the battery.

It should be noted that the terminal insulation part 7 and the internal insulation part 8 are both plastic parts. The plastic parts have good insulation performance and elastoplasticity, which facilitate extrusion and installation.

As shown in FIG. 1 and FIG. 2, a portion of the side wall of the housing 1 close to the bottom of the housing 1 is contracted inwardly to define a necking 10, so that an installation platform 11 is formed in the housing 1. The second current collector plate 4 is disposed on the installation platform 11 and connected to the inner wall of the housing 1. A structural strength of the housing 1 is improved by providing the necking 10 on the bottom of the housing 1, thereby improving an impact resistance of the battery. When the necking 10 is provided, a part of the side wall of the housing 1 is bent inward horizontally to define an annular installation platform 11, which facilitates an installation of the second current collector plate 4.

For example, as shown in FIG. 2, a bottom edge of the side wall of the housing 1 is crimped inwardly and coupled with the necking 10 to define a U-shaped groove 12, and an outer edge of the cover board 6 is clamped in the U-shaped groove 12. The battery further includes a sealing ring 9. The sealing ring 9 is clamped between the outer edge of the cover board 6 and the U-shaped groove 12, which maintains a good sealing effect between the cover board 6 and the U-shaped groove 12 and prevents external impurities such as water or dust from entering into the housing 1. Meanwhile, the sealing ring 9 can also protect the cover board 6 and the housing 1 to avoid a rigid extrusion contact between the cover board 6 and the housing 1 during installation, so as to avoid damage to the cover board 6 and the housing 1.

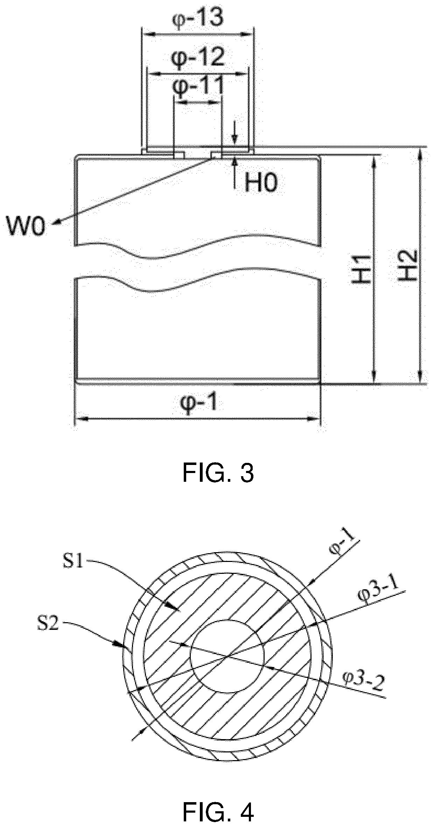

As shown in FIG. 3 and FIG. 4, a height H1 of the housing 1 of the battery in the embodiment ranges from 80mm to 120mm, and a height H2 of the battery ranges from 81mm to 124mm. The height H2 of the battery includes the height H1 of the housing 1 and a height H0 of a part of the output terminal 5 protruding from the top wall of the housing 1, and the height H0 ranges from 1mm to 4mm. For example, the height H1 may be 81mm, 90mm, 100mm, 110mm or 120mm, etc, and the height H2 may be 81mm, 90mm, 100mm, 110mm or 124mm, etc.

For example, an external diameter ϕ-1 of the housing 1 ranges from 10mm to 50mm. For example, the external diameter ϕ-1 may be 10mm, 20mm, 30mm, 40mm or 50mm, etc. An inner diameter ϕ-11 of the through hole of the housing 1 ranges from 3mm to 20mm, for example, the inner diameter ϕ-11 may be 3mm, 10mm, 15mm, 18mm or 20mm, etc. A distance W0 between the through hole and the output terminal 5 ranges from 0.5mm to 7.5mm, for example, the distance W0 may be 0.5mm, 1mm, 3mm, 5mm or 7.5mm, etc. A diameter of a part of the output terminal 5 protruding from the housing 1 is ϕ-12. A difference between a diameter ϕ-13 of the terminal insulation part 7 and the diameter ϕ-12 of the part of the output terminal 5 protruding from the housing 1 is W1, and the difference W1 ranges from 0.8mm to 10mm, for example, the difference W1 may be 0.8mm, 2mm, 4mm, 8mm or 10mm, etc.

For example, a ratio of an area of a vertical section of the housing 1 to an area of a cross section of the housing 1 ranges from 0.25 to 0.65. For example, the ratio of the area of the vertical section of the housing 1 to the area of the cross section of the housing 1 may be 0.25, 0.3, 0.4, 0.5 or 0.65, etc. It should be understood that the vertical section of the housing 1 is a section perpendicular to the cross section of the housing 1 and passes through an axis of the housing 1.

As shown in FIG. 4, a ratio of an area S2 of a crimped part of the housing 1 to the area of the cross section of the housing 1 ranges from 0.05 to 0.5. For example, the ratio of the area S2 of the crimped part to the area of the cross section of the housing 1 may be 0.05, 0.1, 0.2, 0.4 or 0.5, etc.

The battery in the embodiment further includes an explosion-proof valve, and the cover board 6 is provided with the explosion-proof valve. A ratio of a projection area S1 of the explosion-proof valve on the cross section of the housing 1 to the area of the cross section of the housing 1 ranges from 0.03 to 0.99, which optimizes the ratio of the projection area of the explosion-proof valve on the cross section of the housing 1 and is conducive to improving a pressure relief efficiency of the explosion-proof valve when a thermal runaway in the battery occurs. For example, the ratio of the projection area S1 to the area of the cross section of the housing 1 may be 0.03, 0.1, 0.2, 0.4 or 0.99, etc.

For example, the explosion-proof valve is shaped as a circular ring, an outer ring diameter ϕ3-1 of the explosion-proof valve ranges from 33mm to 44mm, and an inner ring diameter ϕ3-2 of the explosion-proof valve ranges from 8mm to 14mm. For example, the outer ring diameter ϕ3-1 may be 33mm, 35mm, 38mm, 40mm or 44mm, etc, and the inner ring diameter ϕ3-2 may be 8mm, 10mm, 11mm, 13mm or 14mm, etc.

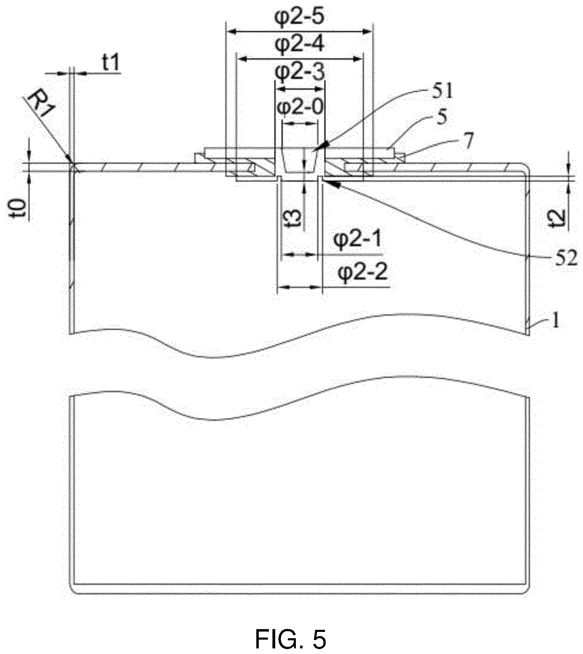

As shown in FIG.5, a diameter ϕ2-3 of a part of the output terminal 5 passing through the through hole ranges from 2.7mm to 17mm. For example, the diameter of the part of the output terminal 5 passing through the through hole may be 2.7mm, 8mm, 10mm, 14mm or 17mm, etc. A diameter ϕ2-4 of a flanged structure of the output terminal 5 in the housing 1 ranges from 3.8mm to 25mm, for example, the diameter ϕ2-4 may be 3.8mm, 5mm, 10mm, 20mm or 25mm, etc. A diameter ϕ2-5 of a flanged structure of the terminal insulation part 7 in the housing 1 ranges from 4.3mm to 48.8mm, for example, the diameter ϕ2-5 may be 4.3mm, 5mm, 20mm, 40mm or 48.8mm, etc.

For example, a ratio of a projection area of a top of the output terminal 5 on the cross section of the housing 1 to the area of the cross section of the housing 1 ranges from 0.015 to 0.45. That is, a ratio of an area of a part of the output terminal 5 protruding from the top wall of the housing 1 to an area of the top wall of the housing 1 ranges from 0.015 to 0.45. For example, the ratio of the area of the part of the output terminal 5 protruding from the top wall of the housing 1 to the area of the top wall of the housing 1 may be 0.015, 0.1, 0.2, 0.3 or 0.45, etc.

As shown in FIG.5, a top of the output terminal 5 is provided with a first counterbore 51 in a taper shape, and a diameter of a large-diameter end of the first counterbore 51 ranges from 2.4mm to 14mm. For example, the diameter ϕ2-0 of the large-diameter end of the first counterbore 51 may be 2.4mm, 8mm, 10mm, 12mm or 14mm, etc. A bottom of the output terminal 5 is provided with a second counterbore 52 in a ring shape, an inner ring diameter ϕ2-1 of the second counterbore 52 ranges from 2.1mm to 11mm, and an outer ring diameter ϕ2-2 of the second counterbore 52 ranges from 2.4mm to 14mm. For example, the inner ring diameter ϕ2-1 may be 2.1mm, 5mm, 8mm, 10mm, or 11mm, etc. An inner ring diameter of the second counterbore 52 is ϕ2-2, and the outer ring diameter ϕ2-2 of the second counterbore 52 ranges from 2.4mm to 14mm. For example, the outer ring diameter ϕ2-2 may be 2.4mm, 5mm, 8mm, 12mm or 14mm, etc. A depth t2 of the second counterbore 52 ranges from 0.3mm to 1mm. For example, the depth t2 may be 0.3mm, 0.5mm, 0.8mm, 0.9mm or 1mm, etc. A distance t3 between a bottom wall of the first counterbore 51 and the bottom wall of the output terminal 5 ranges from 0.15mm to 1.5mm. For example, the distance t3 may be 0.15mm, 0.5mm, 0.8mm, 1mm or 1.5mm.

A thickness t0 of the top wall of the housing 1 ranges from 0.5mm to 1.2mm, for example, the thickness t0 may be 0.5mm, 0.6mm, 0.7mm, 1mm or 1.2mm, etc. A thickness t1 of the side wall of the housing 1 ranges from 0.25mm to 1.2mm, for example, the thickness t1 may be 0.25mm, 0.6mm, 0.7mm, 1mm or 1.2mm, etc. A filleted corner R1 at the top of the housing 1 ranges from 0.6mm to 3.6mm, for example, the filleted corner R1 may be 0.6mm, 1.5mm, 2mm, 3mm, or 3.6mm, etc. It should be noted that a length of the filleted corner R1 at the top of housing 1 transitioning along the top wall of the housing 1 ranges from 0.6mm to 5.4mm, for example, the length of the filleted corner R1 at the top of housing 1 transitioning along the top wall of the housing 1 may be 0.6mm, 1.5mm, 2mm, 4mm or 5.4mm, etc. A length of the filleted corner R1 at the top of housing 1 transitioning along the side wall of the housing 1 ranges from 0.48mm to 5.4mm, for example, the length of the filleted corner R1 at the top of the housing 1 transitioning along the side wall of the housing 1 may be 0.48mm, 1.5mm, 2mm, 4mm or 5.4mm, etc.

## Claims

1. A battery, comprising:
a housing (1), wherein a top wall of the housing (1) is provided with a through hole, and a bottom of the housing (1) is provided with an open end;
a jellyroll (2), wherein a first tab (21) and a second tab (22) are provided on ends of the jellyroll (2) respectively in an axial direction of the jellyroll (2) ;
a first current collector plate (3) and a second current collector plate (4), wherein the first tab (21) is connected to the first current collector plate (3), and the second tab (22) is connected to the housing (1) via the second current collector plate (4);
an output terminal (5), wherein the output terminal (5) is sealed and insulated in the through hole, and the output terminal (5) is connected to the first current collector plate (3); and
a cover board (6), sealed at the open end of the bottom of the housing (1).

2. The battery according to claim 1, wherein a portion of a side wall of the housing (1) close to the bottom of the housing (1) is contracted inwardly to define a necking (10), an installation platform (11) is formed in the housing (1), and the second current collector plate (4) is disposed on the installation platform (11) and connected to an inner wall of the housing (1).

3. The battery according to claim 2, wherein a bottom edge of the side wall of the housing (1) is crimped inwardly and coupled with the necking (10) to define a U-shaped groove (12), and an outer edge of the cover board (6) is clamped in the U-shaped groove (12).

4. The battery according to claim 3, wherein a ratio of an area of a crimped portion of the housing (1) to an area of a cross section of the housing (1) ranges from 0.05 to 0.5.

5. The battery according to any one of claim 1 to claim 4, further comprising:
an explosion-proof valve, wherein the explosion-proof valve is disposed on the cover board (6), and a ratio of a projection area of the explosion-proof valve on a cross section of the housing (1) to an area of a cross section of the housing (1) ranges from 0.03 to 0.99.

6. The battery according to claim 5, wherein the explosion-proof valve is shaped as a circular ring, an outer ring diameter of the explosion-proof valve ranges from 33mm to 44mm, and an inner ring diameter of the explosion-proof valve ranges from 8mm to 14mm.

7. The battery according to any one of claim 1 to claim 4, wherein a height of the housing (1) ranges from 80mm to 120mm, and a height of the battery ranges from 81mm to 124mm.

8. The battery according to any one of claim 1 to claim 4, wherein a ratio of an area of a vertical section of the housing (1) to an area of a cross section of the housing (1) ranges from 0.25 to 0.65.

9. The battery according to any one of claim 1 to claim 4, wherein an outer diameter of the housing (1) ranges from 10mm to 50mm.

10. The battery according to any one of claim 1 to claim 4, wherein an inner diameter of the through hole ranges from 3mm to 20mm, and a distance between the through hole and the output terminal (5) ranges from 0.5mm to 7.5mm.

11. The battery according to any one of claim 1 to claim 4, wherein a top of the output terminal (5) is provided with a first counterbore (51) in a taper shape, a diameter of a large-diameter end of the first counterbore (51) ranges from 2.4mm to 14mm, a bottom of the output terminal (5) is provided with a second counterbore (52) in a ring shape, an inner ring diameter of the second counterbore (52) ranges from 2.1mm to 11mm, and an outer ring diameter of the second counterbore (52) ranges from 2.4mm to 14mm.

12. The battery according to any one of claim 1 to claim 4, wherein a ratio of a projection area of a top of the output terminal (5) on a cross section of the housing (1) to an area of a cross section of the housing (1) ranges from 0.015 to 0.45.
